Europäisches Patentamt

European Patent Office

Office européen des brevets

(19)

(11) Veröffentlichungsnummer: **0 029 956**
**B1**

(12) **EUROPÄISCHE PATENTSCHRIFT**

(45) Veröffentlichungstag der Patentschrift: **28.11.84**

(21) Anmeldenummer: **80107182.0**

(22) Anmeldetag: **19.11.80**

(51) Int. Cl.³: **G 21 C 13/02, B 25 B 27/00**

(54) **Werkzeug zum Verschliessen einer Bohrung mit einem Verschlusselement.**

(30) Priorität: **04.12.79 DE 2948663**

(43) Veröffentlichungstag der Anmeldung:
**10.06.81 Patentblatt 81/23**

(45) Bekanntmachung des Hinweises auf die
Patenterteilung:
**28.11.84 Patentblatt 84/48**

(84) Benannte Vertragsstaaten:
**AT CH FR IT LI**

(56) Entgegenhaltungen:
**DE-A-1 614 512**
**GB-A-2 008 710**
**US-A-3 175 727**

(73) Patentinhaber: **BROWN BOVERI REAKTOR
GmbH**
**Dudenstrasse 44**
**D-6800 Mannheim 1 (DE)**

(72) Erfinder: **Dietrich, Alban, Ing. grad.**
**Moltkestrasse 34**
**D-6733 Hassloch (DE)**

(74) Vertreter: **Dahlmann, Gerhard, Dipl.-Ing. et al
c/o Brown Boveri & Cie., AG Zentralbereich
ZPT/P Postfach 351
D-6800 Mannheim (DE)**

EP 0 029 956 B1

**Beschreibung**

Die Erfindung betrifft ein Werkzeug zum Verschließen einer Bohrung mit einem Verschlußelement, das aus zwei einen Dichtungsring zwischen sich aufnehmenden Deckeln besteht, wobei am unteren Deckel ein Gewindebolzen befestigt ist, der mit seinem freien Gewindeende über eine Bohrung den oberen Deckel durchsetzt und wobei durch Gegeneinanderbewegen dieser Deckel über eine am freien Gewindeende des Gewindebolzens angreifende Mutter der Dichtungsring an der Bohrungsinnenwand zur Anlage kommt.

Ein Werkzeug für ein derartiges Verschlußelement ist aus der GB—A—2 008 710 bekannt. Es ist jedoch für das Verschließen von Bohrungen ausgelegt, die sich in Systemen befinden, die während des Verschließvorganges noch unter Druck stehen. Aufgrund des zur Abstützung erforderlichen Platzbedarfs kann dieses Werkzeug nur eingesetzt werden, wenn die Umgebung der Bohrung gut zugänglich ist.

Weiterhin ist aus der US—A—3 175 727 ein Verschlußelement für das Abdichten eines in einem Motorblock befindlichen Lecks bekannt. Über das Werkzeug zum Bedienen dieses Verschlußelements ist dort nichts ausgesagt, da dies offensichtlich mit einem handelsüblichen Schraubenschlüssel erfolgen kann.

Bei dem nachfolgend geschilderten Problemfall ist die Handhabung des Verschlußelements aufgrund der beengten Platzverhältnisse nicht so einfach. So wird bei einer wassergekühlten Kernreaktoranlage nach deren Abschalten und Drucklosfahren zum Wechseln der Brennelemente der Deckel des Reaktordruckbehälters entfernt und der Raum oberhalb des nun offenen Reaktordruckbehälters mit Wasser geflutet. Diese Maßnahme ist erforderlich, um die Brennelemente unter einer ausreichenden Wasserabdeckung vom Reaktordruckbehälter zum Brennelementlagerbecken transportieren zu können. Der Reaktordruckbehälter-Deckel ist über 60 Stehbolzen, die im Flansch des Reaktordruckbehälters eingeschraubt sind, befestigt. Vor dem Wegnehmen des Reaktordruckbehälter-Deckels werden die Stehbolzen aus den Gewindebohrungen des Reaktordruckbehälter-Flansches entfernt, um sie vor den Einflüssen des Flutwassers zu schützen.

Die nun freiliegenden Gewindebohrungen, welche in den ferritischen Bereich des Reaktordruckbehälter-Flansches eingebracht sind, müssen jetzt vor dem Fluten derart abgedeckt werden, daß kein Wasser in sie eindringen kann. Da alle sonstigen mit Wasser in Berührung kommenden Flächen des Reaktordruckbehälters mit einer austenitischen Plattierung versehen sind, sind nur die Gewindebohrungen vor zu Korrosion führenden Wassereinflüssen zu schützen. Das Verschließen der Gewindebohrungen muß vor Wegnahme des Reaktordruckbehälter-Deckels erfolgen, da derselbe bei diesen Arbeiten als Abschirmung gegenüber dem aktiven Reaktorkern dient.

Aufgrund der trotz aufgesetztem Reaktordruckbehälter-Deckel noch vorhandenen Reststrahlung muß das Verschließen möglichst einfach vonstatten gehen, damit die Strahlenbelastung für das Personal ein vertretbares Maß nicht übersteigt.

Die Erfindung stellt sich daher die Aufgabe, für ein Verschlußelement der eingangs genannten Art ein Werkzeug anzugeben, das ein Verschließen einer derart schwer zugänglichen Bohrung sowie ein einfaches Einsetzen oder Entfernen des Verschlußelements ermöglicht.

Gelöst wird die Aufgabe erfindungsgemäß dadurch, daß das Werkzeug aus zwei ineinander gesteckten relativ zueinander verdrehbaren Rohrkörpern besteht, die je ein dem Mehrkantprofil der Mutter entsprechendes Mehrkantprofil aufweisen, daß der äußere Rohrkörper mit einem das Mehrkantprofil enthaltenden Vorsprung auf der obersten Stirnfläche des oberen Deckels des Verschlußelements abgestützt werden kann, daß die Höhe des Vorsprungs kleiner ist als die Höhe eines zwischen der Mutter und der obersten Stirnfläche angeordneten Distanzringes, daß das Mehrkantprofil des inneren Rohrkörpers so ausgebildet ist, daßer die Mutter formschlüssig umgibt, daß die Mehrkantprofile unter Verwendung einer am äußeren Rohrkörper angebrachten Arretiervorrichtung in einer deckungsgleiche oder in eine zueinander versetzte, die Mutter untergreifende, Lage bringbar sind und daß der äußere Rohrkörper einen Anschlag aufweist, der an einen Arretierstift des Verschlußelements anlegbar ist.

Die Kombination dieser Merkmale bringt ein einfach und zuverlässig arbeitendes Werkzeug. Durch die relative Verstellbarkeit der Rohrkörper und damit der Mehrkantprofile zueinander sowie der entsprechend abgestimmten Höhen von Distanzring und Vorsprung des aüßeren Rohrkörpers läßt sich das Verschlußelement leicht in die zu verschließende Bohrung einsetzen bzw. daraus entnehmen. Beim Einsetz- und Entnahmevorgang untergreift nämlich das Mehrkantprofil des äußeren Rohrkörpers die Mutter des Verschlußelements, so daß dasselbe auf einfache Weise gehalten wird. Das Auf- und Zudrehen der Mutter wird durch den Arreitierstift, der ein Verdrehen der beiden Deckel des Verschlußelements relativ zueinander verhindert und den am Arretierstift anliegenden Anschlag des äußeren Rohrkörpers wesentlich erleichtert.

Anhand eines Ausführungsbeispiels und der Fig. 1—7 wird ein Werkzeug zum Handhaben eines Verschlußelements beschrieben. Dabei zeigt:

Fig. 1 einen Längsschnitt durch den Teilbereich eines Reaktordruckbehälters mit einem Verschlußelement und einem Werkzeug,

Fig. 2 einen Längsschnitt durch das Verschlußelement,

Fig. 3 einen Längsschnitt durch das Werkzeug,

Fig. 4 einen Schnitt entlang der Linie IV—IV der Fig. 3,

Fig. 5 einen Schnitt entlang der Linie V—V der Fig. 3 in verkleinertem Maßstab.

Fig. 6 einen Schnitt entlang der Linie VI—VI der Fig. 3 und

Fig. 7 eine Ansicht in Pfeilrichtung VII der Fig. 3.

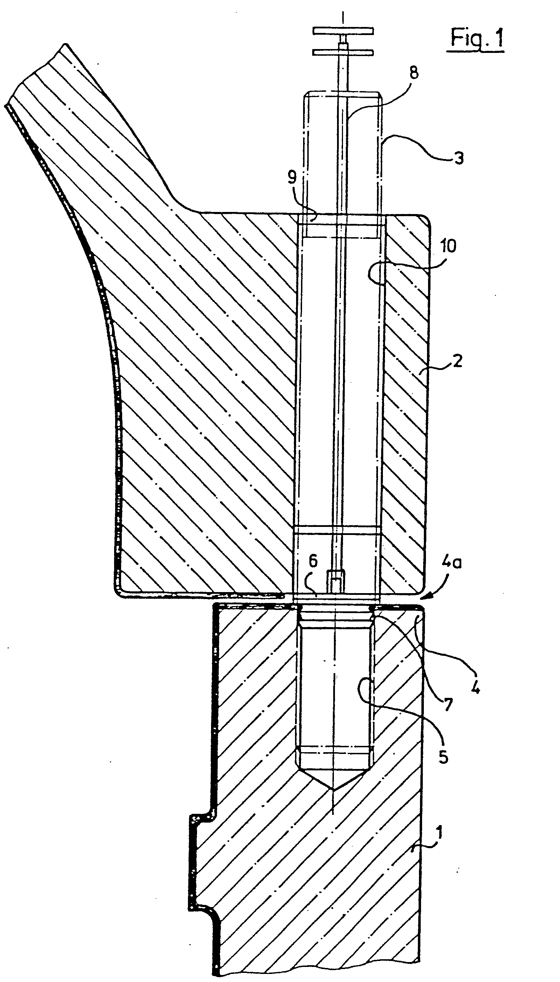

In Fig. 1 ist ein Teil der Wand eines Reaktordruckbehälters 1 zu erkennen, der mit dem Reaktordruckbehälterdeckel 2 verschlossen ist. Ebenso wie der Reaktordruckbehälter 1 ist auch sein Deckel 2 mit einer Plattierung aus austenitischem Material versehen. Ein strichpunktiert gezeichneter Stehbolzen 3 dient zum Festspannen des Reaktordruckbehälterdeckels 2 gegen den Flansch 4 des Reaktordruckbehälters. Über den Umfang des Flansches sind 60 derartige Stehbolzen verteilt und in jede eine Gewindebohrung 5 eingeschraubt. Ein Verschlußelement 6 ist in eine Eindrehung 7 der Gewindebohrung 5 eingesetzt und mit einem Werkzeug 8 verbunden. Das Werkzeug ist über Abstandshalter 9 in der Durchgangsbohrung 10 für die Stehbolzen 3 geführt, die vor der Durchführung des Verfahrens bereits entfernt sind.

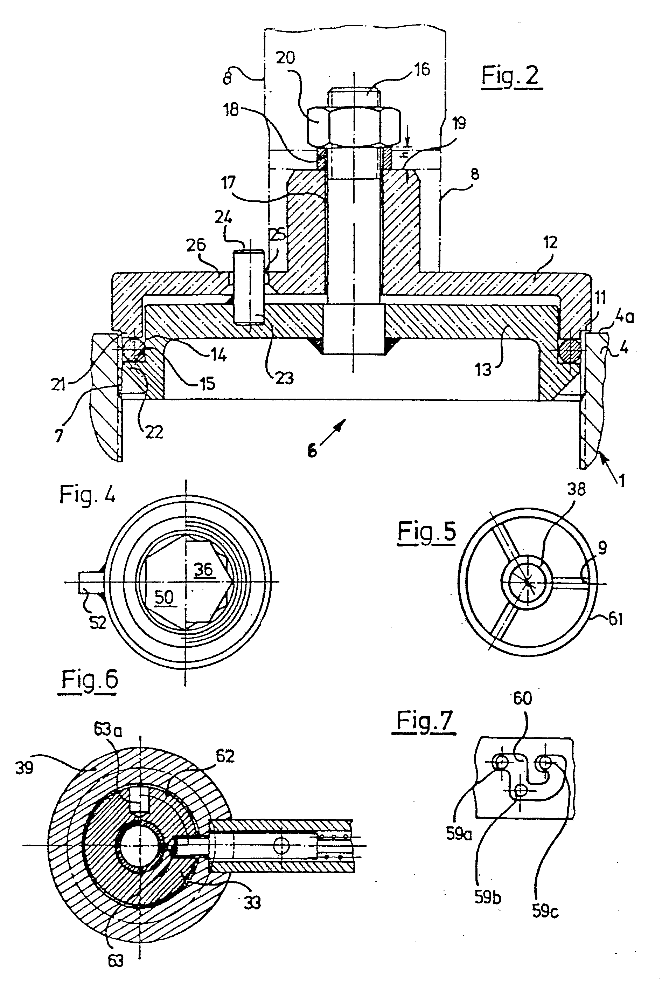

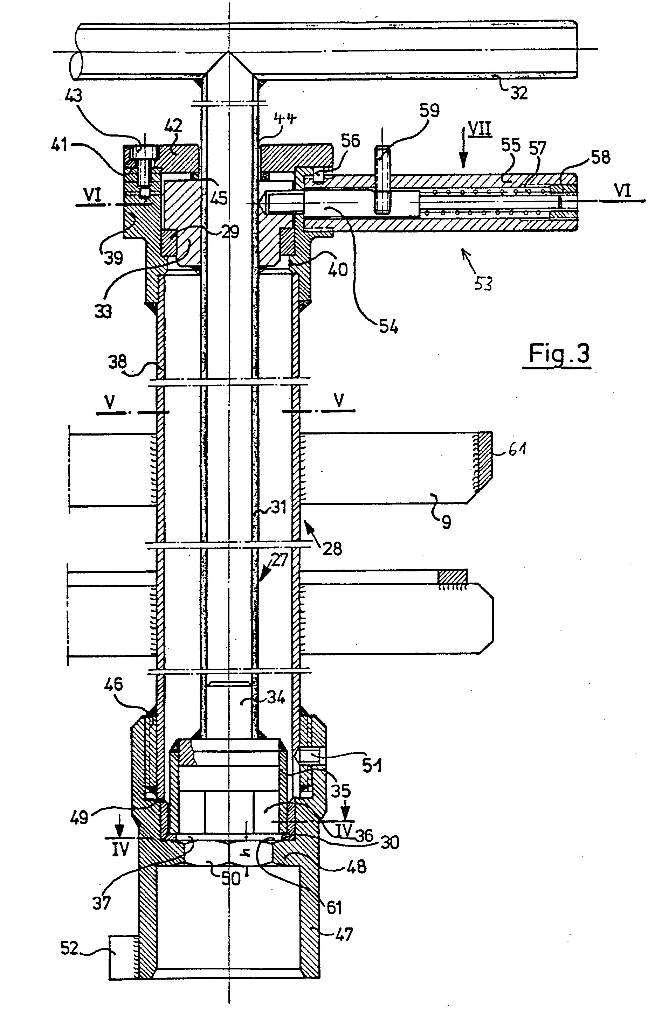

Die Fig. 2 zeigt einen Längsschnitt des mit seiner Schulter 11 auf der Flanschoberseite 4a abgesetzten Verschlußelements 6. Es besteht aus einem oberen topfförmig ausgebildeten Deckel 12, der über einen unteren ebenfalls topfförmigen Deckel 13 gestülpt ist und dabei eine U-förmige Ringnut 14 zur Aufnahme des Rundschnurringes 15 bildet. Der untere Deckel 13 weist eine Auskragung 22 auf und stellt somit den Nutengrund und eine Seitenwand der U-förmigen Ringnut 14. Im unteren Deckel 13 ist ein Gewindebolzen 16 eingeschweißt der über eine im oberen Deckel 12 angebrachte Bohrung 17 denselben durchsetzt.

Ein Distanzring 18 übergreift den Gewindebolzen an seinem freien Ende und ist auf der Fläche 19 des oberen Deckels abgestützt. Eine Sechskantmutter 20 legt sich an den Distanzring 18 an und gestattet mit Hilfe des mit strichpunktierten Linien angedeuteten Werkzeuges 8 die axiale Bewegung der Deckel 12, 13.

Die Fig. 2 zeigt den Rundschnurring 15 ohne Verformung. In dieser Stellung ragt er nicht über den Außendurchmesser der Auskragung 22 bzw. der Abstufung 21 hinaus, so daß ein ausreichendes Spiel zwischen dem Rundschnurring und der Freidrehung 7 zum Einsetzen bzw. Herausnehmen des Verschlußelements besteht. Durch entsprechendes Drehen der Mutter 20 mit dem Werkzeug 8 werden die Deckel 12, 13 gegeneinander bewegt. Der Rundschnurring 15 wird verformt und dehnt sich zwangsläufig in Richtung der offenen Seite der U-förmigen Ringnut aus, so daß er an der Umfangsfläche der Freidrehung zur Anlage kommt. Damit ein Verdrehen der Deckel 12, 13 relativ zueinander verhindert wird, ist im unteren Deckel 13 ein Arretierstift 23 eingeschweißt. Mit seinem freien Ende 24 durchsetzt er eine Bohrung 25 im Boden 26 des oberen Deckels 12 und ragt über diesen Boden hinaus.

Das in der Fig. 3 bis 7 dargestellte Werkzeug 8 besteht aus zwei ineinandergesteckten Rohrkörper 27, 28 die koaxial zueinander angeordnet sind. Über die Lagerelemente 29, 30 ist der innere Rohrkörper 27 innerhalb des äußeren Rohrkörpers 28 auf diesem abgestützt. Der innere Rohrkörper 27 besteht aus einem Rohr 31 an dessen oberen Ende ein ebenfalls aus einem Rohr gebildeter Hebel 32 angeschweißt ist, der zum Verdrehen des inneren Rohrkörpers 27 relativ zum äußeren Rohrkörper 28 dient. Zur Abstützung des inneren Rohrkörpers 27 ist am Rohr 31 ein Stützring 33 angeschweißt, der auf dem Lagerelement 29 ruht. Am unteren Ende des Rohres 31 ist ein Bundbolzen 34 eingeschweißt, der an seiner Bundaußenseite mit einer Hülse 35 verschweißt ist. Die Hülse weist an ihrem freien Ende ein Innensechskantprofil 36 auf, welches die gleiche Schlüsselweite wie die Mutter 20 des Verschlußelements besitzt. Über die Stirnfläche 37 der Hülse 35 ruht der innere Rohr- körper 27 auf dem topfförmig ausgebildeten Lagerelement 30. Es dient damit ebenso wie das Lagerelement 29 sowohl zur axialen Abstützung als auch zur radialen Führung des inneren Rohrkörpers 27. Der äußere Rohrkörper 28 ist aus einem Rohr 38 gebildet, das an seinem oberen Ende mit einer Nabe 39 verschweißt ist. Auf einer nach innen gerichteten Auskragung 40 der Nabe 39 ist das Lagerelement 29 abgestützt. An der Stirnfläche 41 der Nabe 39 ist eine ringförmige Scheibe 42 mittels Schrauben 43 befestigt die an der inneren Umfangsfläche der Nabe zentriert ist. Durch eine im Zentrum der Scheibe 42 angeordnete Bohrung 44 erstreckt sich das Rohr 31. Ein zwischen der Scheibe 42 und dem Stützring 33 angeordneter Distanzring 45 dient zur Einstellung des für die relative Drehbewegung der Rohrkörper 27, 28 zueinander notwendigen axialen Spiels. Eine Gewindemuffe 46 übergreift das untere Ende des Rohres 38 und ist mit diesem verschweißt. Das Gewinde der Muffe 46 trägt ein als Überwurfmutter ausgebildetes Verlängerungsstück 47, welches zwischen seinem Vorsprung 48 und der Stirnfläche 49 des Rohres 38 das Lagerelement 30 einspannt. Der Vorsprung 48 ist mit einem Innensechskantprofil 50 versehen, das die gleiche Schlüsselweite wie die Mutter 20 des Verschlußelements 6 und des Innensechskantprofils 36 der Hülse 35 aufweist. Das Verlängerungsstück 47 ist durch wenigstens einen Stift 51 in seiner Lage gesichert. Am freien Ende des Verlängerungsstückes ist ein Anschlag 52 angeschweißt, der beim Einsatz des Werkzeuges 8 an dem Arretierstift 23 des Verschlußelements 6 angelegt ist. Aus Flachmaterial bestehende Abstandshalter 9 kragen vom Rohr 38 aus und dienen über den an ihren freien Enden befestigten Ring 61 zur Führung des Werkzeuges 8 in der Durchgangsbohrung 10 des Reaktordruckbehälterdeckels 2 (Fig. 5). Eine Arretiereinrichtung 53, deren Arretierbolzen 54 durch die Nabe 39 in den Stützring 33 greift, ermöglicht die Verriegelung der beiden Rohrkörper 27, 28 sowie deren Freigabe zu einer relativen Drehbewegung zueinander. Das Gehäuse 55 der Arretiereinrichtung ist in den Mantel der Nabe 39 eingeschraubt und mit Hilfe eines Stiftes 56 gesichert. Eine Druckfeder 57 ist zwischen dem hohlgebohrten Gewindestopfen 58 und dem Arretierbolzen 54 eingespannt. Sie hält den Arretierbolzen in Vorspannung, so daß er je nach der Stellung des mit ihm verbundenen Steuerbolzens 59 in der Steuerkurve 60 ganz, teilweise oder nicht in dem Stützring 33 und somit im inneren Rohrkörper 27 eingerastet ist. (Fig. 6, 7). Die Fig. 4 läßt die gegeneinander verdrehten Innensechskantprofile 36 und 50 erkennen. Hierbei befindet sich der Steuerbolzen 59 in der in Fig. 7 gezeigten Stellung 59a und der Arretierbolzen 54 in der aus den Fig. 3 und 6 ersichtlichen Position. In dieser Stellung untergreift das Innensechskantprofil 50 die Mutter 20 und das Verschlußelement 6 ist mit dem Werkzeug 8 verbunden in dem die besagte Mutter auf der Schulter 61 des Vorsprungs 48 abgestützt ist. Befindet sich der Steuerbolzen 59 in der Stellung 59b (Fig. 7), so kann der Arretierbolzen 54 zusammen mit dem äußeren Rohrkörper 28 entlang der Nut 62 um 90° verstellt werden und rastet in die Bohrung 63a gemäß der Fig. 6 ein. In dieser Stellung sind die Innensechskantprofile 36, 50 deckungsgleich, so daß ein Koppelungs- oder Entkoppelungsvorgang zwischen Werkzeug und Verschlußelement eingeleitet werden kann. Befindet sich der Steuerbolzen 59 in der Stellung 59c (Fig. 7), so ist er nicht in den Stützring 33 eingerastet. In dieser Stellung erfolgt das Anziehen oder Lösen der Mutter 20 des Verschlußelements 6. Das Werkzeug 8 ist über den Vorsprung 48 auf der Fläche 19 des oberen Deckels 12 abgestützt und der Anschlag 52 ist gegen den Arretierstift 23 gedrückt um ein Mitdrehen des Verschlußelements 6 zu verhindern. Über den Hebel 32 wird der innere Rohrkörper 27 ca. zwei bis drei mal um seine Achse gedreht. Danach ist je nach der Drehrichtung der Rundschnurring 15 entweder verformt und an die Umfangsfläche der Freidrehung 7 angedrückt oder in seine ursprüngliche Form zurückgegangen. Im ersteren Fall werden die Innensechskantprofile 36, 50 durch entsprechende Verstellung der Arretiereinrichtung 53 deckungsgleich übereinandergestellt und das Werkzeug kann problemlos abgezogen werden. Im zweiten Fall werden die Innensechskantprofile gegeneinander versetzt eingestellt, so daß die Mutter 20 von der Schulter 61 des Vorsprungs 48 unterstützt wird. Das Verschlußelement kann dann in dieser Koppelstellung in die Gewindebohrung im Reaktordruckbehälter-Flansch eingesetzt oder von dort entnommen werden.

Mit dem erfindungsgemäßen Werkzeug wird mit einfachen Mitteln ein sicher und schnell dichtendes Verschließen der im Flansch des Reaktordruckbehälters angeordneten Gewindebohrungen erreicht.

Bezugszeichenliste

| | |
|---|---|
| 1 | Reaktordruckbehälter |
| 2 | Reaktordruckbehälterdeckel |
| 3 | Stehbolzen |
| 4 | Flansch |
| 4a | Flanschoberseite |
| 5 | Gewindebohrung |
| 6 | Verschlußelement |
| 7 | Freidrehung |
| 8 | Werkzeug |
| 9 | Abstandshalter |
| 10 | Durchgangsbohrung |
| 11, 61 | Schulter |
| 12 | oberer Deckel |
| 13 | unterer Deckel |
| 14 | Ringnut |
| 15 | Rundschnurring |
| 16 | Gewindebolzen |
| 17, 25, 44 63, 63a | Bohrung |
| 18, 45 | Distanzring |
| 19 | Fläche |
| 20 | Mutter |
| 21 | Abstufung |
| 22, 40 | Auskragung |
| 23 | Arretierstift |
| 24 | freies Ende |
| 26 | Boden |
| 27 | innerer Rohrkörper |
| 28 | äußerer Rohrkörper |
| 29, 30 | Lagerelement |
| 31, 38 | Rohr |
| 32 | Hebel |
| 33 | Stützring |
| 34 | Bundbolzen |
| 35 | Hülse |
| 36, 50 | Innensechskantprofile |
| 37, 41, 49 | Stirnfläche |
| 39 | Nabe |
| 42 | Scheibe |
| 43 | Schraube |
| 46 | Gewindemuffe |
| 47 | Verlängerungsstück |
| 48 | Vorsprung |
| 51, 56 | Stift |
| 52 | Anschlag |
| 53 | Arretiereinrichtung |
| 54 | Arretierbolzen |
| 55 | Gehäuse |
| 57 | Druckfeder |
| 58 | Gewindestopfen |
| 59 | Steuerbolzen |
| 60 | Steuerkurve |
| 61 | Ring |
| 62 | nut. |

## Patentansprüche

1. Werkzeug zum Verschließen einer Bohrung mit einem Verschlußelement (6), das aus zwei einen Dichtungsring (15) zwischen sich aufnehmenden Deckeln (12, 13) besteht, wobei am unteren Deckel (13) ein Gewindebolzen (16) befestigt ist, der mit seinem freien Gewindeende über eine Bohrung (17) den oberen Deckel (12) durchsetzt und wobei durch Gegeneinanderbewegen dieser Deckel über eine am freien Gewindeende des Gewindebolzens (16) angreifende Mutter (20) der Dichtungsring (15) an der Bohrungsinnenwand zur Anlage kommt, dadurch gekennzeichnet, daß das Werkzeug aus zwei ineinander gesteckten relativ zueinander verdrehbaren Rohrkörpern (27, 28) besteht, die je ein dem Mehrkantprofil der Mutter (20) entsprechendes Mehrkantprofil (36, 50) aufweisen, daß der äußere Rohrkörper (28) mit einem das Mehrkantprofil (50) enthaltenden Vorsprung (48) auf der obersten Stirnfläche (19) des oberen Deckels (12) des Verschlußelements (6) abgestützt werden kann, daß die Höhe des Vorsprungs (48) kleiner ist als die Höhe eines zwischen der Mutter (20) und der obersten Stirnfläche (19) angeordneten Distanzringes (18), daß das Mehrkantprofil (36) des inneren Rohrkörpers (27) so ausgebildet ist, daß es die Mutter (20) formschlüssig umgibt, daß die Mehrkantprofile (36, 50) unter Verwendung einer am äußeren Rohrkörper (28) angebrachten Arretiervorrichtung (53) in eine Deckungsgleiche oder in eine zueinander versetzte, die Mutter (20) untergreifende Lage bringbar sind und daß der äußere Rohrkörper (28) einen Anschlag (52) aufweist, der an einen Arretierstift (23) des Verschlußelements (6) anlegbar ist.

2. Werkzeug nach Anspruch 1, so ausgebildet, daß es in einer Durchgangsbohrung (10) für einen Stehbolzen (3) zur Befestigung eines Reaktordruckbehälterdeckels (2) geführt werden kann.

## Revendications

1. Outil pour obturer un trou avec un élément d'obturation (6) qui consiste en deux couvercles (12, 13) emprisonnant entre eux une bague d'étanchéité (15), une tige filetée (16), fixée au couvercle inférieur (13), traversant par son extrémité filetée libre le couvercle supérieur (12) en passant par un perçage (17), et la bague d'étanchéité (15) venant s'appliquer contre la paroi interne dudit trou, par l'intermédiaire d'un écrou (20) en prise avec l'extrémité filetée libre de ladite tige filetée (16), par suite d'un déplacement desdits couvercles l'un vers l'autre, caractérisé par le fait que cet outil se compose de deux corps tubulaires (27, 28) emboîtés l'un dans l'autre et pouvant tourner mutuellement, qui présentent chacun un profil (36, 50) à pans multiples correspondant au profil à plusieurs pans de l'écrou (20); par le fait que le corps tubulaire externe (28) peut prendre appui, par une saillie (48) renfermant le profil (50) à pans multiples, contre la face extrême supérieure (19) du couvercle supérieur (12) de l'élément d'obturation (6); par le fait que le hauteur de ladite saillie (48) est inférieure à la hauteur d'une bague d'espacement (18) interposée entre l'écrou (20) et ladite face extrême supérieure (19); par le fait que le profil (36) à pans multiples du corps tubulaire interne (27) est réalisé de telle sorte qu'il entoure l'écrou (20) par conformation; par le fait que les profils (36, 50) à pans multiples peuvent être amenés, par l'utilisation d'un dispositif d'arrêt (53) monté sur le corps tubulaire externe (28), à une position de coïncidence ou à une position de décalage mutuel dans laquelle ils coiffent l'écrou (20) par-en dessous; et par le fait que le corps tubulaire externe (28) comporte une butée (52) pouvant être plaquée contre une goupille (23) de blocage de l'élément d'obturation (6).

2. Outil selon la revendication 1, réalisé de façon qu'il puisse être guidé dans un perçage traversant (10) recevant un tirant (3) en vue de la fixation du couvercle (2) de la cuve de pression d'un réacteur.

## Claims

1. A tool for closing a bore by means of a closing element (6) which consists of two covers (12, 13) receiving a sealing ring (15) between them, there being fastened to the lower cover (13) a threaded bolt (16) which by means of its free thread end passes through the upper cover (12) via a bore (17), and the sealing ring (15) coming to rest against the inner wall of the bore as a result of the movement of these covers relative to one another, via a nut (20) engaging on the free thread end of the threaded bolt (16), characterised in that the said tool consists of two tubular bodies (27, 28) which are inserted into one another and are rotatable relative to one another and which each have a polygonal profile (36, 50) corresponding to the polygonal profile of the nut (20), in that the outer tubular body (28) is supportable, by means of a projection (48) containing the polygonal profile (50), on the topmost end face (19) of the upper cover (12) of the closing element (6), in that the height of the projection (48) is less than the height of a spacer ring (18) located between the nut (20) and the topmost end face (19), in that the polygonal profile (36) of the inner tubular body (27) is so designed that it surrounds the nut (20) positively, in that the polygonal profiles (36, 50) are capable of being brought, by the use of a locking device (53) attached to the outer tubular body (28), into a coincidental position or into a position offset relative to one another, in which they engage under the nut (20), and in that the outer tubular body (28) has a stop (52) which can be brought up against a locking pin (23) of the closing element (6).

2. A tool according to Claim 1, which is so designed that it can be guided in a through-bore (10) for a stay bolt (3) in order to fasten the cover (2) of a reactor pressure vessel.

O 029 956

Fig. 1

Fig. 2

Fig. 4

Fig. 5

Fig. 6

Fig. 7

Fig. 3